# EUROPEAN PATENT APPLICATION

(11) **EP 3 124 793 A1**
(43) Date of publication of application: **01.02.2017**
(21) Application number: 15770393.5
(22) Date of filing: 18.03.2015
(51) Int. Cl.: F04D 29/057, F04D 29/28

(54) **CENTRIFUGAL COMPRESSOR IMPELLER**

(30) Priority: 24.03.2014 JP 2014060605
(71) Applicant: IHI Corporation, Tokyo 135-8710 (JP); Ihi Compressor And Machinery Co., Ltd., Tokyo 135-0062 (JP)
(72) Inventor: MARUYAMA Taketo, Tokyo 135-8710 (JP); NAKANO Ken, Tokyo 135-8710 (JP); MOTOI Hisayuki, Tokyo 135-8710 (JP); OMORI Naomichi, Tokyo 135-8710 (JP); MIYAHARA Kazumasa, Tokyo 135-0062 (JP); FUJIMAKI Takeshi, Tokyo 135-0062 (JP)
(74) Representative: Grünecker Patent- und Rechtsanwälte PartG mbB
(86) International application number: PCT/JP2015/058146
(87) International publication number: WO 2015/146755

(57) **Abstract**

A centrifugal compressor impeller includes blades (3); and a disc (2) which has a front surface (2c) on which the blades (3) are provided, and a back surface (2e) from which a shaft section (2d) that protrudes toward a direction opposite to the blade (3) is provided, in which a bearing surface (10) of a fluid bearing provided on the back surface (2e) of the disc (2) is provided at a location farther away from a rotational center of the centrifugal compressor impeller than a bottom surface or an inner wall surface of the shaft section (2d).

## Description

### Technical Field

The present invention relates to a centrifugal compressor impeller.

Priority is claimed on Japanese Patent Application No. 2014-060605, filed March 24, 2014, the content of which is incorporated herein by reference.

### Background Art

In the manufacturing of centrifugal compressor impellers, balance adjustment for improving the rotational stability of the centrifugal compressor impeller is performed. In this balance adjustment, by actually rotating the centrifugal compressor impeller, the behavior of the centrifugal compressor impeller is confirmed. For example, Patent Document 1 discloses a supporting device which supports a centrifugal compressor impeller when the centrifugal compressor impeller is rotated for the balance adjustment.

In the supporting device disclosed in Patent Document 1, a tip end surface and an inner wall surface of a shaft section provided on a back surface of a disc are used as a bearing surface of a fluid bearing. More particularly, the tip end surface (bottom surface) of the shaft section of the centrifugal compressor impeller installed in a posture in which the shaft section faces downward is used as a thrust bearing surface of the fluid bearing, and the inner wall surface of the cylindrical shaft section is used as a radial bearing surface of the fluid bearing. By supplying fluid between the supporting device, and the thrust bearing surface and the radial bearing surface, the centrifugal compressor impeller is rotatably supported.

### Citation List

### Patent Documents

Patent Document 1: Japanese Unexamined Patent Application, First Publication No. 2005-172538

### Summary of Invention

### Technical Problem

However, the tip end surface of the shaft section and the inner wall surface of the shaft section, which are used as the bearing surfaces, are disposed at locations extremely close to a central axis (rotational center) of the centrifugal compressor impeller. During the rotation for balance adjustment, the centrifugal compressor impeller is supported only by the tip end surface and the inner wall surface of the shaft section. However, since the tip end surface of the shaft section and the inner wall surface of the shaft section are close to the central axis (rotational center), there is a possibility that the centrifugal compressor impeller may be unstably rotated. In a large centrifugal compressor impeller in particular, the center of gravity of the centrifugal compressor impeller is positioned above the shaft section, and thus the rotation easily becomes unstable.

The present invention has been made in view of the aforementioned problems, and an object of the present invention is to provide a centrifugal compressor impeller that is more stably rotated during balance adjustment than in the related art.

### Solution to Problem

According to a first aspect of the present invention, there is provided a centrifugal compressor impeller including: blades; and a disc which has a front surface on which the blades are provided, and a back surface from which a shaft section that protrudes toward a direction opposite to the blade is provided, in which a bearing surface of a fluid bearing provided on the back surface of the disc is provided at a location farther away from a rotational center of the centrifugal compressor impeller than a bottom surface or an inner wall surface of the shaft section.

According to a second aspect of the present invention, in the centrifugal compressor impeller according to the first aspect, the bearing surface of the fluid bearing which is processed to have a smaller surface roughness than other regions of the disc may be provided on at least one of the back surface of the disc and an outer circumferential surface of the shaft section.

According to a third aspect of the present invention, in the centrifugal compressor impeller according to the first aspect, an annular thrust bearing surface having the rotational center as the center may be provided on the back surface of the disc, as the bearing surface.

According to a fourth aspect of the present invention, in the centrifugal compressor impeller according to the first aspect, a radial bearing surface may be provided on the entire circumference of an outer circumferential surface of the shaft section, as the bearing surface.

According to a fifth aspect of the present invention, in the centrifugal compressor impeller according to the third aspect, a radial bearing surface may be provided on the entire circumference of the outer circumferential surface of the shaft section, as the bearing surface, and the thrust bearing surface and the radial bearing surface may be provided at locations farther away from the rotational center than the bottom surface and the inner wall surface of the shaft section.

According to a sixth aspect of the present invention, in the centrifugal compressor impeller according to the fourth or fifth aspect, the radial bearing surface may be formed to have a diameter smaller than an adjacent region.

### Effects of Invention

According to the present invention, the bearing surface is disposed at a location farther away from the central axis (rotational center) than the tip end surface of the shaft section and the inner wall surface of the shaft section of the related art. Therefore, the centrifugal compressor impeller is more stably rotated during balance adjustment than in the related art.

### Brief Description of Drawings

FIG 1A is a vertical sectional view of a centrifugal compressor impeller according to an embodiment of the present invention.
FIG. 1B is a bottom view of the centrifugal compressor impeller according to the embodiment of the present invention.
FIG 2A is an enlarged sectional view including a part of a thrust bearing surface.
FIG. 2B is an enlarged sectional view including a part of a radial bearing surface.
FIG. 3A is a schematic view illustrating a state where the centrifugal compressor impeller according to the embodiment of the present invention is supported.
FIG. 3B is a schematic view illustrating a state where the centrifugal compressor impeller according to the embodiment of the present invention is supported.
FIG. 4 is a vertical sectional view of a modification example of the centrifugal compressor impeller according to the embodiment of the present invention.

### Description of Embodiments

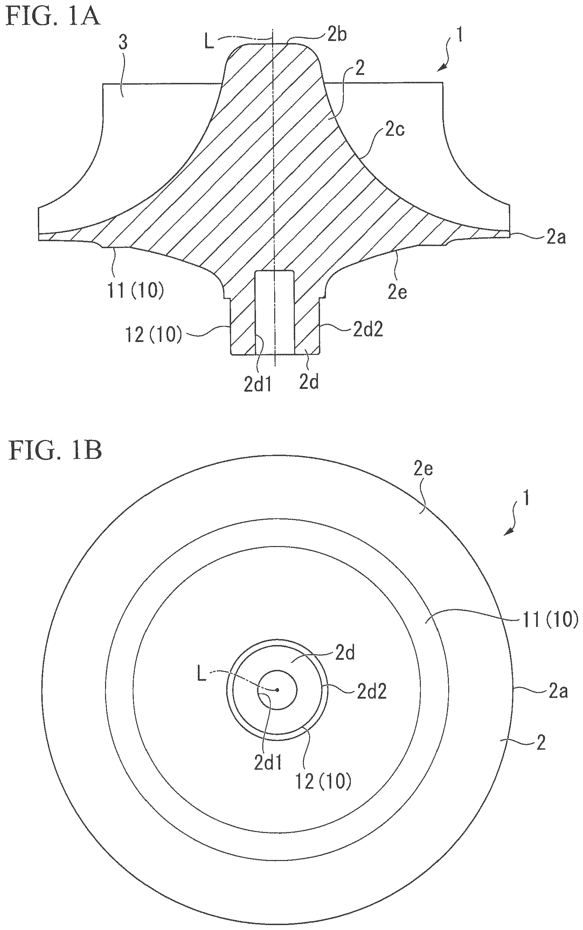

Hereinafter, a centrifugal compressor impeller according to an embodiment of the invention will be described in detail with reference to the drawings. FIG. 1A is a vertical sectional view of the centrifugal compressor impeller according to the embodiment of the invention. FIG. 1B is a bottom view of the centrifugal compressor impeller according to the embodiment of the invention. As illustrated in FIGS. 1A and 1B, a centrifugal compressor impeller 1 of the embodiment includes a disc 2 and blades 3.

The disc 2 is connected to an output shaft of a motor or a turbine when the disc 2 is assembled to a centrifugal compressor, and is driven to rotate in response to the rotation of the output shaft. The disc 2 is a base for supporting the blades 3. As illustrated in FIG. 1A, the disc 2 includes a curved front surface 2c that connects a maximum outer diameter portion 2a with a tip end portion 2b, and a back surface 2e that connects the maximum outer diameter portion 2a with a shaft section 2d, and is a rotor having a central axis L as a rotational center.

The shaft section 2d is provided on the center of the back surface 2e of the disc 2 so as to protrude from the back surface 2e toward a direction opposite to the blade 3 in a direction of the central axis L. In addition, the shaft section 2d is a cylindrical portion having a fastening hole 2d1 that is opened to a tip end of the shaft section 2d. In a state where an output shaft of a motor or the like is inserted into the fastening hole 2d1 of the shaft section 2d, the shaft section 2d and the motor or the like are fastened.

A plurality of blades 3 are provided on the front surface 2c of the disc 2 with intervals around the central axis L. The blades 3 compress and accelerate fluid by the disc 2 being driven to rotate.

In the centrifugal compressor impeller 1 according to the embodiment, a bearing surface 10 of the fluid bearing is provided on the back surface 2e of the disc 2 and an outer circumferential surface 2d2 of the shaft section 2d. The bearing surface 10 is subjected to surface finishing so that surface roughness of the bearing surface 10 is smaller than those of other regions (for example, the front surface 2c and the back surface 2e) of the disc 2 except for the bearing surface 10. For example, the surface roughness (arithmetic average roughness) of the bearing surface 10 is 3.2 µm and the surface roughness (arithmetic average roughness) of other regions is 6.3 µm.

The bearing surface 10 provided on the back surface 2e of the disc 2 is a thrust bearing surface 11 that supports in a thrust direction (the vertical direction in FIG. 1A) the centrifugal compressor impeller 1 disposed in a posture in which the shaft section 2d faces downward when balance adjustment is performed. That is, in the centrifugal compressor impeller 1 according to the embodiment, the thrust bearing surface 11 is provided on the back surface 2e of the disc 2, as the bearing surface 10.

As illustrated in FIG. 1B, the thrust bearing surface 11 is provided to have an annular shape with the central axis L as the center, and is formed to face downward when the centrifugal compressor impeller 1 is disposed in a posture in which the shaft section 2d faces downward (that is, a posture during balance adjustment). The flatness of the thrust bearing surface 11 is, for example. 100 µm or less.

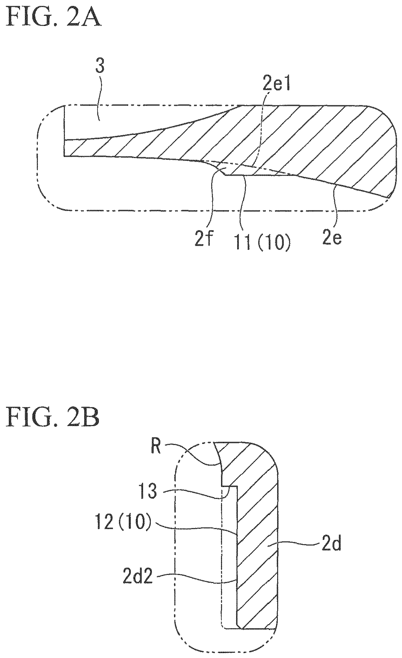

FIG 2A is an enlarged sectional view including a part of the thrust bearing surface II. As illustrated in FIG. 2A, the thrust bearing surface 11 is provided as a lower surface of a projection part 2f which projects downward with respect to an original back surface position 2e1 of a case where the thrust bearing surface 11 is not provided. For example, the thrust bearing surface 11 is formed by performing surface finishing such as polishing or the like, on the lower surface of the projection part 2f.

The bearing surface 10 provided on the outer circumferential surface 2d2 of the shaft section 2d is a radial bearing surface 12 that supports in a radial direction (a direction orthogonal to the thrust direction) the centrifugal compressor impeller I during balance adjustment. That is, in the centrifugal compressor impeller 1 according to the embodiment, the cylindrical radial bearing surface 12 is provided on the outer circumferential surface 2d2 of the shaft section 2d, as the bearing surface 10.

As illustrated in FIG. 1B, the radial bearing surface 12 is formed to face sideways when the centrifugal compressor impeller 1 is disposed in a posture in which the shaft section 2d faces downward (that is, a posture during balance adjustment), and is provided over the entire circumference of the outer circumferential surface 2d2 of the shaft section 2d. The roundness of the radial bearing surface 12 is, for example, 50 µm or less.

FIG. 2B is an enlarged sectional view including a part of the radial bearing surface 12. As illustrated in FIG 2B, the radial bearing surface 12 is formed to have a diameter smaller than an adjacent region R. In this manner, by forming the radial bearing surface 12 to have a smaller diameter, a step portion 13 is formed at the boundary between the radial bearing surface 12 and the adjacent region R above the radial bearing surface 12.

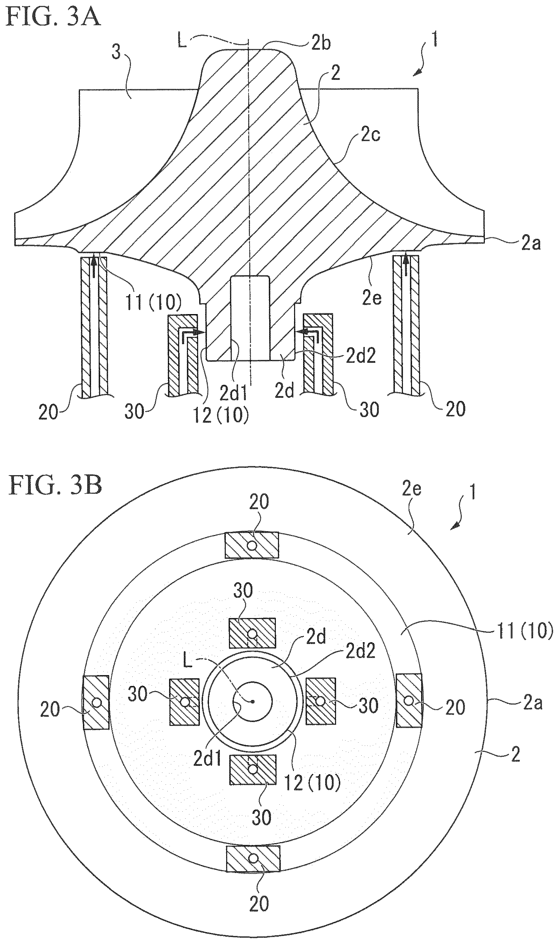

Next, a method of supporting the centrifugal compressor impeller 1 according to the embodiment when balance adjustment is performed is described with reference to FIGS. 3A and 3B. FIG. 3A is a diagram in which a part of a supporting device that is schematically illustrated is added to FIG. 1A. FIG. 3B is a diagram in which a part of the supporting device that is schematically illustrated is added to FIG. 1B.

As illustrated in FIGS. 3A and 3B, when balance adjustment is performed, a first fluid injection unit 20 is disposed to face the thrust bearing surface 11. The first fluid injection unit 20 is disposed below the thrust bearing surface 11, and injects fluid (for example, air or oil) toward the thrust bearing surface 11. In addition, as illustrated in FIG 3B, the first fluid injection unit 20 is disposed so as to face each of four locations in the middle of the thrust bearing surface 11 that is provided in an annular shape around the central axis L. The first fluid injection unit 20 and the thrust bearing surface 11 are paired with each other so as to configure the fluid bearing.

When balance adjustment is performed, a second fluid injection unit 30 is disposed to face the radial bearing surface 12. The second fluid injection unit 30 is disposed on the outer side in the radial direction of the shaft section 2d of the radial bearing surface 12, and injects the same fluid as that of the first fluid injection unit 20 toward the radial bearing surface 12. In addition, as illustrated in FIG. 3B, the second fluid injection unit 30 is disposed so as to face each of four locations with intervals so as to surround the shaft section 2d. The second fluid injection unit 30 and the radial bearing surface 12 are paired with each other so as to configure the fluid bearing.

Then, the first fluid injection unit 20 injects fluid toward four locations of the thrust bearing surface 11, and the second fluid injection unit 30 injects fluid toward four locations of the radial bearing surface 12. In this state, the centrifugal compressor impeller 1 is rotated. For example, the centrifugal compressor impeller I is rotated by blowing compressed air toward the blades 3 from the horizontal direction by a driving device (not illustrated). In this manner, a liquid film is formed between the supporting device and the thrust bearing surface 11 and between the supporting device and the radial bearing surface 12. Thus, the centrifugal compressor impeller 1 is rotated in a state of extremely low friction.

The fluid injected from the first fluid injection unit 20 flows between the first fluid injection unit 20 and the thrust bearing surface 11 and is discharged to the surroundings of the first fluid injection unit 20. In addition, the fluid injected from the second fluid injection unit 30 flows between the second fluid injection unit 30 and the radial bearing surface 12 and is discharged to a space between the second fluid injection units 30. Therefore, the fluid does not stay at the first fluid injection unit 20 and the second fluid injection unit 30.

According to the centrifugal compressor impeller 1 of the embodiment, the bearing surfaces 10 of the fluid bearing are formed to the back surface 2e of the disc 2 and the outer circumferential surface 2d2 of the shaft section 2d. These bearing surfaces 10 are disposed at locations farther away from the central axis L as the rotational center than the tip end surface of the shaft section 2d and the inner wall surface of the shaft section 2d that are conventionally used as the bearing surfaces. Therefore, the centrifugal compressor impeller 1 is more stably rotated during balance adjustment than in the related art.

In the centrifugal compressor impeller 1 of the embodiment, the annular thrust bearing surface 11 having the central axis L as the center is provided on the back surface 2e of the disc 2, as the bearing surface 10. According to the centrifugal compressor impeller 1 of the embodiment, it is possible to support the weight of the centrifugal compressor impeller 1 at locations farther away from the central axis L than in the related art in the radial direction of rotation, and thus the centrifugal compressor impeller I is more stably rotated. In addition, since the thrust bearing surface 11 is provided so as to surround the central axis L without being disconnected, the centrifugal compressor impeller 1 is further stably rotated.

In the centrifugal compressor impeller 1 of the embodiment, the radial bearing surface 12 is provided on the entire circumference of the outer circumferential surface 2d2 of the shaft section 2d, as the bearing surface 10. According to the centrifugal compressor impeller 1 of the embodiment, since the radial bearing surface 12 is provided on the entire circumference of the shaft section 2d without being disconnected, the centrifugal compressor impeller 1 is more stably rotated.

In the centrifugal compressor impeller 1 of the embodiment, the radial bearing surface 12 is formed to have a diameter smaller than the adjacent region R by cutting the shaft section 2d. Therefore, it is easy to form the radial bearing surface 12.

Further, by forming the radial bearing surface 12 to have a diameter smaller than the adjacent region R, the step portion 13 is provided as illustrated in FIG. 2B. Therefore, the fluid injected toward the radial bearing surface 12 changes its direction on the radial bearing surface 12 and collides with the step portion 13, thereby generating force to lift the centrifugal compressor impeller 1. Thus, it is possible to reduce the load on the thrust bearing surface 11.

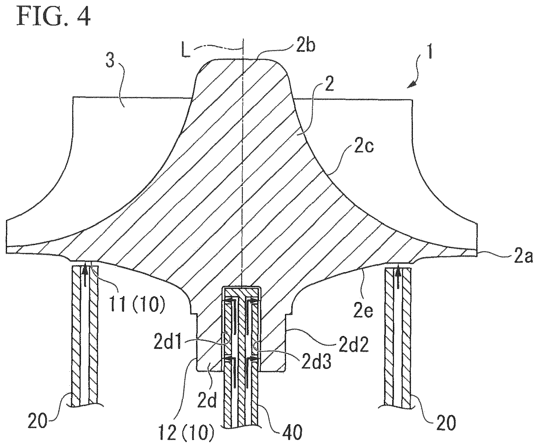

Hereinbefore, the centrifugal compressor impeller 1 according to the embodiment of the invention has been described, but the invention is not limited to the embodiment, and modifications can be freely made within the scope of the invention. For example, the centrifugal compressor impeller 1 described in the above embodiment includes, as the bearing surface 10, the thrust bearing surface 11 provided on the back surface 2e of the disc 2, and the radial bearing surface 12 provided on the outer circumferential surface 2d2 of the shaft section 2d. However, as illustrated in FIG. 4, the radial bearing surface 12 may be provided on an inner wall surface 2d3 of the shaft section 2d without providing the radial bearing surface 12 on the outer circumferential surface 2d2 of the shaft section 2d. In this case, as illustrated in FIG. 4, by injecting fluid from a third fluid injection unit 40 that is inserted into the fastening hole 2d1, to the radial bearing surface 12, it is possible to support the centrifugal compressor impeller I during the rotation to be in a state of low friction.

In addition, in the centrifugal compressor impeller 1 described in the embodiment, the thrust bearing surface 11 is provided on the lower surface of the projection part 2f. However, for example, instead of the projection part 2f, a concave portion may be provided and the thrust bearing surface may be formed on the bottom of the concave portion.

In addition, in the centrifugal compressor impeller 1 described in the embodiment, the radial bearing surface 12 is formed to have a diameter smaller than the adjacent region R. However, for example, the outer circumferential surface of the shaft section 2d may be formed to have a diameter larger than the adjacent region R.

In addition, the centrifugal compressor impeller 1 described in the embodiment includes, as the bearing surface 10, both the thrust bearing surface 11 provided on the back surface 2e of the disc 2, and the radial bearing surface 12 provided on the outer circumferential surface 2d2 of the shaft section 2d. However, for example, only one of the thrust bearing surface 11 and the radial bearing surface 12 may be provided, and the other of the thrust bearing surface and the radial bearing surface may be provided at the same position as that in the related art.

### Industrial Applicability

According to the invention, it is possible to provide a centrifugal compressor impeller that is more stably rotated during balance adjustment than that in the related art.

### Reference Signs List

- 1: centrifugal compressor impeller
- 2: disc
- 2a: maximum outer diameter portion
- 2b: tip end portion
- 2c: front surface
- 2d: shaft section
- 2d1: fastening hole
- 2d2: outer circumferential surface
- 2d3: inner wall surface
- 2e: back surface
- 2e1: back surface position
- 2f: projection part
- 3: blade
- 10: bearing surface
- 11: thrust bearing surface
- 12: radial bearing surface
- 13: step portion
- 20: first fluid injection unit
- 30: second fluid injection unit
- 40: third fluid injection unit
- L: central axis
- R: adjacent region

## Claims

1. A centrifugal compressor impeller comprising:
blades; and
a disc which has a front surface on which the blades are provided, and a back surface from which a shaft section that protrudes toward a direction opposite to the blade is provided,
wherein a bearing surface of a fluid bearing provided on the back surface of the disc is provided at a location farther away from a rotational center of the centrifugal compressor impeller than a bottom surface or an inner wall surface of the shaft section.

2. The centrifugal compressor impeller according to Claim I,
wherein the bearing surface of the fluid bearing which is processed to have a smaller surface roughness than other regions of the disc is provided on at least one of the back surface of the disc and an outer circumferential surface of the shaft section.

3. The centrifugal compressor impeller according to Claim 1,
wherein an annular thrust bearing surface having the rotational center as the center is provided on the back surface of the disc, as the bearing surface.

4. The centrifugal compressor impeller according to Claim 1,
wherein a radial bearing surface is provided on the entire circumference of an outer circumferential surface of the shaft section, as the bearing surface.

5. The centrifugal compressor impeller according to Claim 3,
wherein a radial bearing surface is provided on the entire circumference of the outer circumferential surface of the shaft section, as the bearing surface, and the thrust bearing surface and the radial bearing surface are provided at locations farther away from the rotational center than the bottom surface and the inner wall surface of the shaft section.

6. The centrifugal compressor impeller according to Claim 4,
wherein the radial bearing surface is formed to have a diameter smaller than an adjacent region.

7. The centrifugal compressor impeller according to Claim 5,
wherein the radial bearing surface is formed to have a diameter smaller than an adjacent region.
